# EUROPÄISCHE PATENTSCHRIFT

(11) **EP 4 091 920 B1**
(45) Veröffentlichungstag und Bekanntmachung des Hinweises auf die Patenterteilung: **12.02.2025**
(21) Anmeldenummer: 21174418.0
(22) Anmeldetag: 18.05.2021
(51) Int. Cl.: B62D 35/00, B62D 35/02

(54) **AUTOMOBIL MIT EINEM BEWEGLICHEN WINDLEITELEMENT**
AUTOMOBILE WITH A MOVABLE WIND GUIDE ELEMENT
AUTOMOBILE AYANT UN ÉLÉMENT MOBILE DE GUIDAGE DU VENT

(43) Veröffentlichungstag der Anmeldung: 23.11.2022
(73) Patentinhaber: Blue Technologies BV, 4387 PK Vlissingen (NL)
(72) Erfinder: BENNER, Moritz, 61279 Grävenwiesbach (DE)
(74) Vertreter: Wunderlich & Heim Patentanwälte PartG mbB

(56) Entgegenhaltungen:
- EP-A1- 0 391 864
- EP-A1- 1 506 910
- EP-A1- 3 357 800
- DE-A1- 102016 217 139
- DE-T2- 602004 004 691
- FR-B1- 2 848 521
- JP-A- 2000 033 886

## Beschreibung

Die Erfindung betrifft ein Automobil mit einer Karosserie und mindestens einen verstellbaren Karosserieelement, gemäß dem Oberbegriff des Anspruchs 1.

Die Erfindung betrifft weiterhin ein Verfahren zum Betreiben eines solchen Automobils gemäß dem Anspruch 9.

Automobile weisen eine Karosserie oder einen Wagenoberbau auf, welcher nicht nur für die äußere Erscheinung eines Automobils, sondern insbesondere auch für das Fahrverhalten und einen Luftwiderstand beim Fahren von wesentlicher Bedeutung ist. Die Karosserie weist dabei eine Vielzahl von Karosserieelementen auf, welche aus Blech, Kunststoff, Glasfaserwerkstoffen oder Ähnlichem gebildet sind.

Zur Beeinflussung des Fahrverhaltens eines Automobils ist es bekannt, Karosserieelemente verstellbar auszubilden. Beispielsweise ist es bekannt, am Heck eines Automobils einen sogenannten Heckspoiler anzuordnen, welcher abhängig von der Fahrgeschwindigkeit verstellt werden kann. Ein Heckspoiler dient dazu, ein Strömungsverhalten beim Fahren eines Automobils derart zu verändern und insbesondere zu beeinträchtigen, um am Heck eine erhöhte Andruckkraft auf den Boden zu bewirken. Hierdurch wird eine Straßenlage des Automobils verbessert und es können größere Antriebskräfte bei einem Hinterradantrieb auf die Hinterräder aufgebracht werden.

Die EP 0 391 864 zeigt am jeweiligen Heck der Frontradhäuser an der Karosserie schwenkbar angeordnete Seitenruder um die Fahrstabilität zu verbessern und wahlweise ein Untersteuern zu verhindern.

Die DE 60 2004 004691 zeigt ein Fahrzeug mit Luftleitplatten an der Karosserieunterseite hinter den Rädern, um die Aerodynamik des Fahrzeugs im Bereich der Räder derart zu beeinflussen, dass der Luftwiderstand des Gesamtfahrzeugs sinkt und gleichzeitig den an der Fahrzeugunterseite herrschende Unterdruck so zu beeinflussen, dass der Heckauftrieb am Fahrzeug ebenfalls sinkt.

Die EP 3 257 800 zeigt ein Fahrzeug mit einer an der Heckschürze verstellbaren wannenförmigen Luftleiteinrichtung, um die Luftablösung am Fahrzeugheck und den Fahrzeugseiten zu verbessern und damit die Aerodynamik des Gesamtfahrzeugs zu verbessern.

Die DE 10 2016 217 139 A1 zeigt die Merkmale aus dem Oberbegriff von Anspruch 1.

Der Erfindung liegt die **Aufgabe** zugrunde, ein Automobil anzugeben, bei welchem eine weitere Verbesserung des Fahrverhaltens, insbesondere bei höheren Geschwindigkeiten, erzielt wird.

Die Aufgabe wird durch ein Automobil mit den Merkmalen des Anspruchs 1 gelöst. Bevorzugte Ausführungsformen der Erfindung sind in den abhängigen Ansprüchen angegeben.

Darüber hinaus umfasst die Erfindung auch ein Verfahren zum Betreiben eines derartigen Automobils.

Das erfindungsgemäße Automobil ist dadurch gekennzeichnet, dass mindestes ein Karosserieelement als ein Windleitelement zur Erhöhung der Fahrstabilität ausgebildet und in eine Stabilisierungsposition verstellbar ist.

Ein Grundgedanke der Erfindung liegt darin, an der Karosserie Windleitelemente vorzusehen, welche insbesondere in Fahrtrichtung ausgerichtet oder ausrichtbar sind. Hierdurch kann insbesondere bei höheren Geschwindigkeiten die Spurstabilität oder Spurtreue verbessert werden.

Nach einem weiteren Aspekt der Erfindung ist vorgesehen, dass das Windleitelement in eine Stabilisierungsposition verstellbar ist. Dabei kann das Windleitelement zwischen einer Ausgangsposition, welche eine rückgezogene oder neutrale Position sein kann, und einer Stabilisierungsposition verstellbar sein.

Eine bevorzugte Ausführungsform der Erfindung besteht darin, dass in Fahrtrichtung hinter einem lenkbaren Rad, insbesondere einem Vorderrad, ein Rad-Windleitelement angeordnet ist, und dass das Rad-Windleitelement um eine Hochachse verschwenkbar ist. Nach einer Erkenntnis der Erfindung wird das Fahrverhalten eines Fahrzeuges merklich verbessert, indem hinter einem lenkbaren Rad, welches insbesondere zu den Vorderrädern gehört, ein Windleitelement vorgesehen ist, durch welches die um das Rad strömende Luft gezielt gerichtet werden kann. So können unerwünschte Verwirbelungen hinter dem Rad und unterhalb des Unterbodens reduziert und eine möglichst laminare Strömung um ein Rad erzielt werden.

Besonders vorteilhaft ist es dabei, dass das Rad-Windleitelement abhängig von einem Lenkwinkel eines Lenkrades des Automobils verstellbar ist. Die Position des Rad-Windleitelementes kann sich dabei entsprechend dem Lenkwinkel des Automobils und damit der Stellung des lenkbaren Rades ändern und angepasst werden.

Eine besonders vorteilhafte Weiterbildung der Erfindung besteht darin, dass das Rad-Windleitelement an einer Fahrzeugunterseite angeordnet ist und nach unten ragt und dass eine Mittenebene des Rad-Windleitelementes im Wesentlichen senkrecht zur Radachse des zugeordneten Rades ausgerichtet ist. **In** einer Normalposition, bei welcher die lenkbaren Räder in Fahrtlängsrichtung ausgerichtet sind, wobei also die Radachsen etwa senkrecht zu einer Längsrichtung oder Längsachse des Automobils gerichtet sind, sind die Leisten oder blattförmigen Windleitelemente ebenfalls parallel zur Längsrichtung ausgerichtet. Dabei stehen die Rad-Windleitelemente etwa mittig zu dem jeweils zugeordneten Rad. Bei einem Lenkeinschlag um einen vorgegebenen Lenkwinkel ändert sich die Drehposition des Rad-Windleitelementes um die Hochachse entsprechend, wobei zumindest im Wesentlichen die Rad-Windleitelemente jeweils senkrecht zu den Radachsen des jeweils zugeordneten Rades ausgerichtet sind. Hierdurch kann eine laminare Strömung hinter den Rädern verbessert werden. Vorzugsweise können auch zwei oder mehr Rad-Windleitelemente einem Rad zugeordnet sein. Diese können parallel zueinander und gleichmäßig über eine Radbreite verteilt angeordnet sein.

Nach einer Ausführungsvariante bei dem erfindungsgemäßen Automobil ist es bevorzugt, dass das Rad-Windleitelement abhängig von einem Lenkwinkel eines Lenkrades des Automobils mechanisch und/oder elektronisch mittels einer elektronischen Steuerung verstellbar ist. Bei einer mechanischen Steuerung können entsprechende mechanische Stellglieder vorgesehen sein, welche über eine Lenkmechanik zusammenwirken.

Besonders zweckmäßig ist es, dass elektrische Stellglieder vorgesehen sind, welche von einer elektronischen Steuerung angesteuert werden und durch welche ein Winkel der Rad-Windleitelemente um die jeweils zugeordnete Hochachse mit einer entsprechenden Lagerwelle oder Lagerachse gegenüber einer neutralen Position zur Geradeausfahrt geändert wird.

Grundsätzlich kann ein um eine Stellachse schwenkbar oder drehbar gelagertes Windleitelement auch an anderen Stellen der Karosserie vorgesehen sein, um bei höheren Geschwindigkeiten, insbesondere in einem Geschwindigkeitsbereich von über 200 km/h und insbesondere über 300 km/h eine Richtungsstabilität des Automobils zu verbessern.

Erfindungsgemäß ist es vorgesehen, dass das Windleitelement als eine Finne ausgebildet ist und an der Karosserie ausfahrbar gelagert ist. Die Finne kann dabei ein leisten- oder plattenförmiges Windleitelement sein, welches zwischen einer Rückzugsposition und der Stabilisierungsposition verstellbar ist. In einer Rückzugsposition kann die Finne teilweise oder ganz eingezogen sein, so dass sie gegenüber der angrenzenden Karosserie nicht vorsteht und bündig mit dieser abschließt. In der Stabilisierungsposition ist das Windleitelement aus der Karosserie ausgefahren und kann so eine Leitfunktion, insbesondere bei höheren Geschwindigkeiten, übernehmen. Die Finne kann mittig zu Längsachse am Dach und/oder am Heck angeordnet sein.

Besonders zweckmäßig ist es dabei, dass die mindestens eine Finne hinter einer Fahrgastzelle des Automobils angeordnet und als eine Leiste ausgebildet ist, welche sich in Fahrzeuglängsrichtung erstreckt. Hierdurch kann eine laminare Strömung entlang des Automobils bei höheren Geschwindigkeiten eingestellt oder gefördert werden, welche eine Richtungsstabilität des Automobils verbessert. Dabei können zwei oder mehr Finnen parallel nebeneinander angeordnet sein.

Grundsätzlich kann die leistenförmige Finne glattflächig ausgebildet sein. Erfindungsgemäß ist die mindestens eine Finne mit mindestens einer Abkantung in Längsrichtung ausgebildet. Es kann so eine L-förmige oder T-förmige oder auch Z-förmige Finne gebildet werden, welche einerseits gut an eine Karosserieform angepasst werden kann und andererseits zu einem verbesserten Strömungsverhalten der Finne beiträgt.

Insbesondere kann es dabei vorteilhaft sein, dass die mindestens eine Finne in ihrer Rückzugsposition an der Karosserie anliegt oder einen Teil der Karosserie bildet. Somit ist in einer Rückzugsposition sichergestellt, dass in dieser Position ein möglichst geringer Luftwiderstand gebildet ist und auch die Gefahr von Beschädigungen reduziert ist.

Eine weitere Ausgestaltung der Erfindung besteht darin, dass an einem Heckbereich des Automobils zumindest Teile einer Heckkarosserie an einem Ausstellrahmen angebracht sind, welche zum Bilden eines Windleitelementes gegenüber einem Fahrzeuggrundkörper in Fahrzeuglängsrichtung nach hinten ausfahrbar ist. Hierdurch kann abhängig von der Fahrsituation eine Fahrzeuglänge vergrößert werden. Insbesondere bei einer Fahrt mit einer höheren Geschwindigkeit kann dabei ein vorteilhafter Long-Tail-Effekt erzielt werden, der sich positiv auf das Fahrverhalten und die Richtungsstabilität des Automobils auswirkt. Hingegen können bei Fahrten mit geringer Geschwindigkeit und insbesondere bei eingeschränkten Raumverhältnissen die Heckteile wieder eingezogen werden, wodurch die Fahrzeuglänge wieder verkürzt wird.

Die ausführbaren Teile können dabei an einem gemeinsamen oder mehreren Ausstellrahmen vorgesehen sein. Dieser kann ein Traggestell aufweisen, wobei der Ausstellrahmen über mindestens ein energiebetriebenes Stellelement, insbesondere einen Stellzylinder, zwischen einer eingefahrenen Position und mindestens einer ausgefahrenen Position verstellbar ist. Das Ausfahren kann insbesondere programmgesteuert erfolgen, insbesondere abhängig von Betriebsparametern, insbesondere einer Fahrzeuggeschwindigkeit.

Besonders vorteilhaft ist es nach einer Weiterbildung der Erfindung, dass an dem Ausstellrahmen Heckkotflügel, ein Heck-Karosserieoberteil und/oder eine Heckabschlusspartie angebracht sind. Die Heckabschlusspartie kann dabei auch eine sogenannte Stoßstange und/oder eine Heckleiste mit Diffusorelementen umfassen. Ein Heck-Karosserieoberteil kann insbesondere eine flügelartige Leiste umfassen.

Beim Ausführen des Ausstellrahmens bleiben die Auspuffanlage und insbesondere die Austrittsöffnungen der Auspuffrohre unverändert. Die Austrittsöffnungen der Auspuffrohre befinden sich dabei vorzugsweise in einem oberen Bereich des Hecks, insbesondere auf der Höhe der Oberseite der Hinterräder, so dass auch bei einer ausgefahrenen Heckpartie ein zuverlässiger Austritt der Abgase eines Verbrennungsmotors in die umströmende Umgebungsluft gewährleistet ist.

Nachfolgend wird die Erfindung anhand von bevorzugten Ausführungsbeispielen weiter beschrieben, welche schematisch in den beigefügten Zeichnungen dargestellt sind. In den Zeichnungen zeigen:
- Fig. 1: eine schematische perspektivische Ansicht eines Rades eines erfindungsgemäßen Automobils mit Windeitelement;
- Fig. 2: eine schematische perspektivische Ansicht einer Heckpartie eines erfindungsgemäßen Automobils;
- Fig. 3: eine schematische Darstellung einer Oberseite einer Heckpartie eines erfindungsgemäßen Automobils mit schematisch dargestellten leistenförmigen Windleitelementen;
- Fig. 4: eine schematische Seitenansicht eines erfindungsgemäßen Automobils mit ausgefahrener Finne; und
- Fig. 5: eine schematische Seitenansicht des erfindungsgemäßen Automobils von Fig. 4 mit eingefahrener Finne.

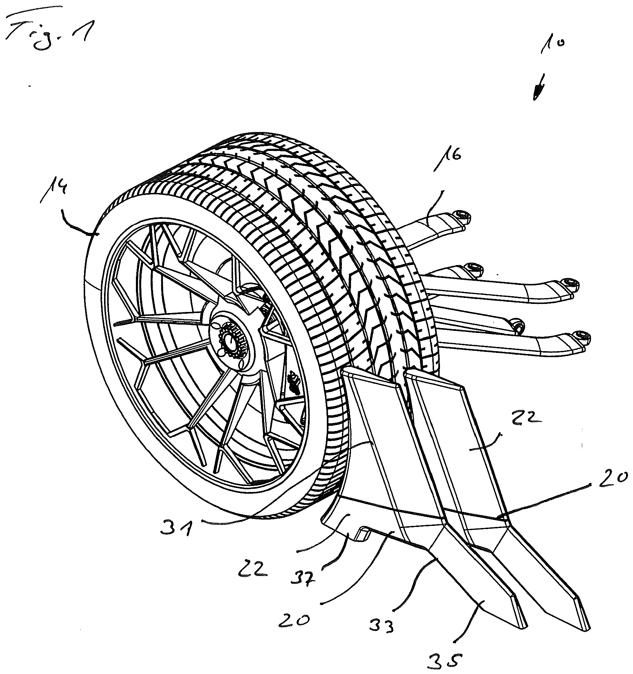

**In** Fig. 1 ist ein Teil eines erfindungsgemäßen Automobils 10 dargestellt, nämlich ein Rad 14 mit einer schematisch angedeuteten Radaufhängung 16. Das Rad 14 ist im Ausführungsbeispiel ein lenkbares Vorderrad. In Fahrtrichtung hinter dem Rad 16 sind an einer Unterseite der nicht dargestellten Karosserie zwei plattenartige Windleitelemente 20 parallel zueinander und verteilt über eine Breite des Rades 14 angeordnet. Die Windleitelemente 20 sind jeweils als Rad-Windleitelemente 22 mit einem plattenartigen Grundkörper 31 und einer an der Unterseite des plattenförmigen Grundkörpers 31 angebrachten sichelförmigen Leiste 33 ausgebildet. Eine zum Rad 14 gerichtete Vorderkante des Rad-Windleitelementes 22 ist bogenförmig und angepasst an den Radius des Rades 14 ausgebildet, so dass ein Abstand von vorzugsweise 2 bis 4 cm zwischen der Vorderkante des Rad-Windleitelementes 22 zur Außenseite des Rades 14 besteht.

Eine Querschnittsform des Rad-Windleitelementes 22 ist etwa tropfenförmig oder flügelprofilförmig gestaltet, wobei entlang der Vorderkante eine runde Verdickung besteht und sich die Querschnittsform zu einer vom Rad 14 abgewandten Hinterkante verjüngt.

Die Unterseite jedes Rad-Windleitelementes 22 ist vorzugsweise durch eine sichelförmige Leiste 33 oder C-förmige Leiste 33 gebildet, welche sich bündig mit einer Hälfte an den Grundkörper 31 anschließt. Eine durch die Sichelform vorgegebene Ausnehmung ist nach unten gerichtet, wobei ein nach unten gerichteter Vorderkantenabsatz 37 gebildet ist. Nach hinten läuft die sichelförmige Leiste 33 in einer Auslaufspitze 35 aus, welche weg vom Rad 14 und schräg nach unten gerichtet ist.

Die einzelnen Windleitelemente 20 sind um eine Hochachse, welche senkrecht zu einer horizontalen Fahrbahn gerichtet ist, drehbar an der nicht dargestellten Karosserie gelagert. Über nicht dargestellte Stellglieder können die einzelnen Windleitelemente 20 um die Hochachse entsprechend einem Lenkwinkel des Rades 14 verschwenkt und angepasst werden. Entsprechend dem Lenkwinkel werden die Rad-Windleitelemente 22 vorzugsweise so verstellt, dass die plattenförmigen Rad-Windleitelemente 22 mit ihrer Längs- oder Plattenebene etwa senkrecht zur Umfangsfläche des Rades 14 gerichtet sind.

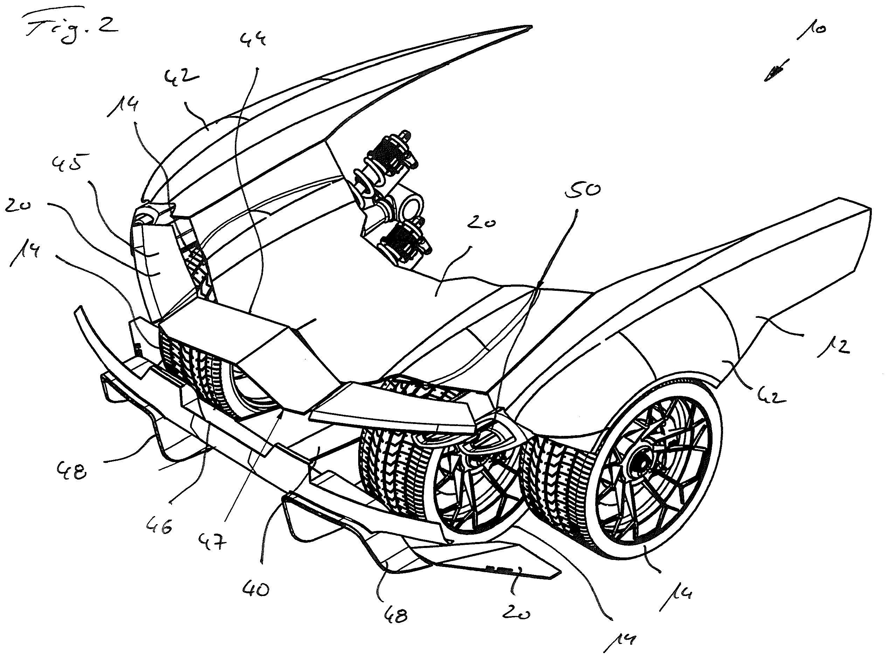

Gemäß einer weiteren Ausführungsform des erfindungsgemäßen Automobils 10 nach Fig. 2 weist dieses eine teilweise dargestellte Karosserie 12 auf, wobei am Heck des Automobils 10 insgesamt vier Räder 14 zum Antrieb des Automobils 10 vorgesehen sind. Die Räder 14 sind dabei jeweils paarweise zueinander angeordnet, wobei die zwei Paare zueinander in Längs- und in Querrichtung versetzt sind.

An dem Heck ist ein in Längsrichtung des Automobils 10 verstellbarer Ausstellrahmen 40 angeordnet, an welchem in dem dargestellten Ausführungsbeispiel eine nach hinten gerichtete Heckabschlusspartie 46 mit Diffusorelementen 48 angebracht ist.

Weiter kann an dem Ausstellrahmen 40, welcher in Längsrichtung zwischen einer Rückzugsposition und einer ausgefahrenen Auszugsposition verstellbar ist, in welcher eine Länge des Automobils 10 vergrößert ist, ein Heckkarosserieoberteil 44 mit einem Heckflügel 46 angebracht sein, so dass auch diese zusammen mit dem Ausstellrahmen 40 in Längsrichtung verstellbar sind.

Vorzugsweise können auch die seitlichen Heckkotflügel 42 oder zumindest Teile davon zusammen mit dem Ausstellrahmen 46 ein- und ausgefahren werden. Der Heckflügel 46 kann leistenförmig mit einer wellenförmigen Hinterkante 47 gebildet sein. Am Heckbereich des Automobils 10 können weiterhin mehrere Auspuffendrohre 50 angeordnet sein, welche im gezeigten Ausführungsbeispiel in einem oberen Bereich beabstandet vom Boden etwa auf Höhe des oberen Endes der Räder 14 angeordnet sind. Hierdurch kann weiter auch bei einem ausgefahrenen Ausstellrahmen 40 mit den verschiedenen Karosserieteilen als Windleitelemente 20 eine gute Abströmung der Abgase eines Verbrennungsmotors erreicht werden, ohne dass diese bei einem ausgefahrenen Heck verstärkt in die sich ergebende hintere Karosserieöffnung einströmt und sich eine unerwünscht hohe Konzentration heißer Abgase bildet.

Durch ein Ausfahren des Ausstellrahmens 40 in Längsrichtung nach hinten kann eine Länge des Automobils 10 vergrößert werden, wodurch ein sogenannter Long-Tail-Effekt an dem Automobil 10 bewirkt wird. Dieser Effekt führt zu einer erhöhten Fahrstabilität des Automobils 10, insbesondere bei Fahrten mit hohen Geschwindigkeiten.

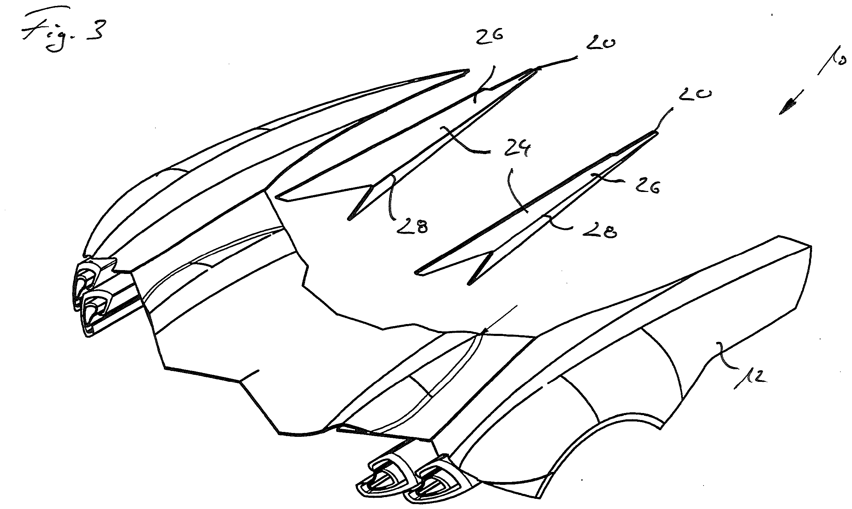

Gemäß Fig. 3 ist eine weitere mögliche Ausführungsform bei einem erfindungsgemäßen Automobil dargestellt. In einem Heckbereich der Karosserie 12, welche entsprechend der Fig. 2 nur teilweise gezeigt und entsprechend gebildet sein kann, können hinter einer nicht dargestellten Fahrgaszelle ausfahrbare leistenförmige Windleitelemente 20 vorgesehen sein, welche als Finnen 24 gebildet sind. Diese leistenförmigen Finnen 24 können über einen nicht dargestellten Ausfahrmechanismus von einer Rückzugsposition zu einer dargestellten Ausfahrposition ausgefahren werden. So kann eine Strömungsführung und damit eine erhöhte Fahrstabilität bei schnellen Fahrten des Automobils unterstützt werden.

Die Finnen 24 können eine pfeilförmige Form mit einer in Fahrtrichtung nach vorne gerichteten Spitze aufweisen. Das sich nach hinten vergrößernde Ende der Finnen 24 kann mit einem V-förmigen Einschnitt schwalbenschwanzartig auslaufen, wodurch eine möglichst laminare Umströmung der Finnen 24 gefördert wird. In der nicht dargestellten eingefahrenen Position können die Finnen 24 in die Karosserie 12 eingefahren sein oder bündig an dieser anliegen. Die Finnen 24 können zur Anpassung an die Karosserie als Leisten 26 mit einer oder mehreren Abkantungen entsprechend einer Karosserieform gebildet sein.

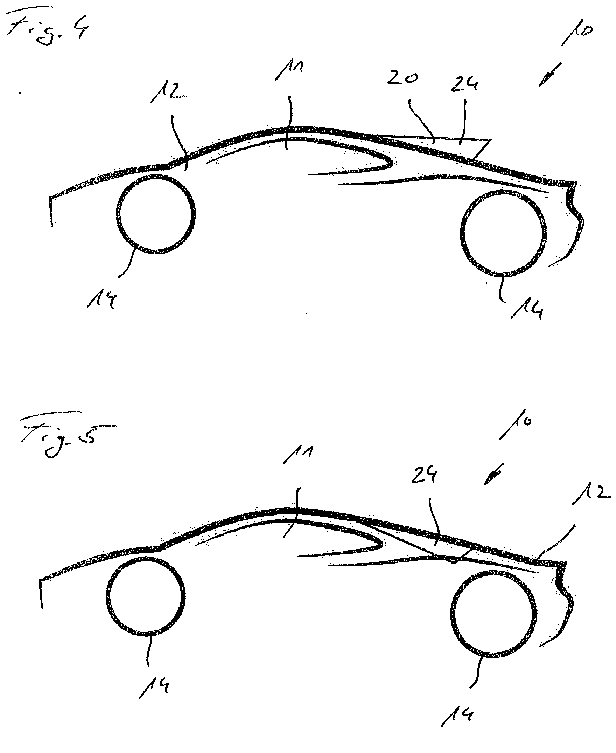

Im Zusammenhang mit den Figuren 4 und 5 ist eine weitere Ausführungsform eines erfindungsgemäßen Automobils 10 dargestellt, wobei das Automobil 10 eine Karosserie 12, Räder 14 sowie eine angedeutete Fahrgastzelle 11 aufweist. An einer Oberseite des Automobils 10, insbesondere in einem Übergangsbereich von der Fahrgastzelle 11 zu einem Heck, ist eine verstellbare Finne 24 als mittiges Windleitelement 20 angeordnet. Diese mittige Finne 24 kann zwischen einer Ausfahrposition gemäß Fig. 4 und einer Einfahrposition gemäß Fig. 5 verstellt werden, in welcher die Finne 24 weitgehend oder vollständig in die Karosserie 12 eingefahren ist..

Auch die Finne 24 entlang einer Oberseite des Automobils 10 unterstützt die Fahrstabilität des Automobils 10 bei Fahrten mit hoher Geschwindigkeit.

## Patentansprüche

1. Automobil mit einer Karosserie (12) und mindestens einem verstellbaren Karosserieelement,
wobei mindestens ein Karosserieelement als ein Windleitelement (20) zur Erhöhung der Fahrstabilität ausgebildet und in eine Stabilisierungsposition verstellbar ist,
wobei das Windleitelement (20) als eine Finne (24) ausgebildet ist und an der Karosserie (12) ausfahrbar gelagert ist,
**dadurch gekennzeichnet,**
**dass** die mindestens eine Finne (24) auf oder hinter einer Fahrgastzelle (11) des Automobils (10) angeordnet und als eine Leiste (26) ausgebildet ist, welche sich in Fahrzeuglängsrichtung erstreckt und
**dass** die mindestens eine Finne (24) mit mindestens einer Abkantung (28) in Längsrichtung ausgebildet ist.

2. Automobil nach Anspruch 1,
**dadurch gekennzeichnet,**
**dass** in Fahrtrichtung hinter mindestens einem lenkbaren Rad (14), insbesondere einem Vorderrad, ein Rad-Windleitelement (22) angeordnet ist und
**dass** das Rad-Windleitelement (22) um eine Hochachse verschwenkbar ist.

3. Automobil nach Anspruch 2,
**dadurch gekennzeichnet,**
**dass** das Rad-Windleitelement abhängig von einem Lenkwinkel eines Lenkrades des Automobils (10) verstellbar ist.

4. Automobil nach Anspruch 2 oder 3,
**dadurch gekennzeichnet,**
**dass** das Rad-Windleitelement (22) an einer Fahrzeugunterseite angeordnet ist und nach unten ragt und
**dass** eine Mittenebene des Rad-Windleitelements (22) im Wesentlichen senkrecht zur Radachse des zugeordneten Rades (14) ausgerichtet ist.

5. Automobil nach einem der Ansprüche 2 bis 4,
**dadurch gekennzeichnet,**
**dass** das Rad-Windleitelement (22) abhängig von einem Lenkwinkel eines Lenkrades des Automobils (10) mechanisch und/oder elektronisch mittels einer elektronischen Steuerung verstellbar ist.

6. Automobil nach einem der Ansprüche 1 bis 5,
**dadurch gekennzeichnet,**
**dass** die mindestens eine Finne (24) in ihrer Rückzugsposition an der Karosserie (12) anliegt oder einen Teil der Karosserie (12) bildet.

7. Automobil nach einem der Ansprüche 1 bis 6,
**dadurch gekennzeichnet,**
**dass** an einem Heckbereich des Automobils (10) zumindest Teile einer Hecckarosserie an einem Ausstellrahmen (40) angebracht sind, welcher zum Bilden eines Windleitelementes (20) gegenüber einem Fahrzeuggrundkörper in Fahrzeuglängsrichtung nach hinten ausfahrbar ist.

8. Automobil nach Anspruch 7,
**dadurch gekennzeichnet,**
**dass** an dem Ausstellrahmen (40) Heckkotflügel (42), ein HeccKarosserieoberteil (44) und/oder eine Heckabschlusspartie (46) angebracht sind.

9. Verfahren zum Betreiben eines Automobils nach einem der Ansprüche 1 bis 8, **dadurch gekennzeichnet,**
**dass** die Finne als Windleitelement (20) abhängig von einer Fahrsituation des Automobils (10) an der Karosserie (12) verstellt, insbesondere ausgefahren wird.

## Claims

1. An automobile with a body (12) and at least one movable body element,
wherein at least one body element is configured as a wind guide element (20) to increase the driving stability and is movable into a stabilisation position, wherein the wind guide element (20) is formed as a fin (24) and is mounted extendably on the body (12),
**characterised**
**in that** the at least one fin (24) is arranged on or behind a passenger compartment (11) of the automobile (10) and is formed as a strip (26) which extends in the vehicle longitudinal direction, and
**in that** the at least one fin (24) is formed with at least one chamfer (28) in the longitudinal direction.

2. The automobile according to claim 1,
**characterised**
**in that** a wheel wind guide element (22) is arranged behind at least one steerable wheel (14), in particular a front wheel, in the direction of travel, and in that the wheel wind guide element (22) is pivotable about a vertical axis.

3. The automobile according to claim 2,
**characterised**
**in that** the wheel wind guide element is adjustable depending on a steering wheel of a steering wheel of the automobile (10).

4. The automobile according to claim 2 or 3,
**characterised**
**in that** the wheel wind guide element (22) is arranged on a vehicle underside and projects downwards, and
**in that** a centre plane of the wheel wind guide element (22) is oriented substantially perpendicularly to the wheel axis of the associated wheel (14).

5. The automobile according to any one of claims 2 to 4,
**characterised**
**in that** the wheel wind guide element (22) is mechanically and/or electronically movable by means of an electronic controller depending on a steering angle of a steering wheel of the automobile (10).

6. The automobile according to any one of claims 1 to 5,
**characterised**
**in that** the at least one fin (24) in its retracted position rests against the body (12) or forms part of the body (12).

7. The automobile according to any one of claims 1 to 6,
**characterised**
**in that**, at a tail region of the automobile (10), at least parts of a tail body are attached to a pop-out frame (40), which is extendable rearwards in the vehicle longitudinal direction relative to a vehicle main body to form a wind guide element (20).

8. The automobile according to claim 7,
**characterised**
**in that** tail wings (42), a tail body upper part (44) and/or a tail termination part (46) are attached to the pop-out frame (40).

9. A method for operating an automobile according to any one of claims 1 to 8, **characterised**
**in that** the fin as wind guide element (20) is moved, in particular extended, on the body (12) depending on a driving situation of the automobile (10).

## Revendications

1. Automobile avec une carrosserie (12) et au moins un élément de carrosserie ajustable,
dans laquelle au moins un élément de carrosserie est réalisé en tant qu'un élément déflecteur (20) destiné à augmenter la stabilité de conduite et peut être ajusté dans une position de stabilisation,
dans laquelle l'élément déflecteur (20) est réalisé comme une ailette (24) et est monté de manière à pouvoir être déployé sur la carrosserie (12),
**caractérisée en ce**
**que** l'au moins une ailette (24) est disposée sur ou derrière une cellule de passagers (11) de l'automobile (10) et est réalisée en tant qu'une baguette (26), laquelle s'étend dans la direction longitudinale du véhicule, et
**que** l'au moins une ailette (24) est réalisée avec au moins un repliage (28) dans la direction longitudinale.

2. Automobile selon la revendication 1,
**caractérisée en ce**
**qu'**un élément déflecteur de roue (22) est disposé dans la direction de déplacement derrière au moins une roue directrice (14), en particulier une roue avant, et
**que** l'élément déflecteur de roue (22) peut être pivoté autour d'un axe vertical.

3. Automobile selon la revendication 2,
**caractérisée en ce**
**que** l'élément déflecteur de roue peut être ajusté en fonction d'un angle de direction d'un volant de l'automobile (10).

4. Automobile selon la revendication 2 ou 3,
**caractérisée en ce**
**que** l'élément déflecteur de roue (22) est disposé sur un côté inférieur de voiture et dépasse vers le bas, et
**qu'**un plan central de l'élément déflecteur de roue (22) est réalisé de manière sensiblement perpendiculaire à l'axe de roue de la roue (14) associée.

5. Automobile selon l'une quelconque des revendications 2 à 4,
**caractérisée en ce**
**que** l'élément déflecteur de roue (22) peut être ajusté mécaniquement et/ou électroniquement au moyen d'une commande électronique en fonction d'un angle de direction d'un volant de l'automobile (10).

6. Automobile selon l'une quelconque des revendications 1 à 5,
**caractérisée en ce**
**que** l'au moins une ailette (24) repose sur la carrosserie (12) dans sa position de retour ou forme une partie de la carrosserie (12).

7. Automobile selon l'une quelconque des revendications 1 à 6,
**caractérisée en ce**
**que** sont installées sur une partie arrière de l'automobile (10) au moins des parties d'une carrosserie arrière sur un cadre d'exposition (40), lequel peut être déployé vers l'arrière dans la direction longitudinale de véhicule par rapport à un corps de base de véhicule pour former un élément déflecteur (20).

8. Automobile selon la revendication 7,
**caractérisée en ce**
**que** sont installés sur le cadre d'exposition (40) des garde-boue arrière (42), une partie supérieure de carrosserie arrière (44) et/ou une partie de terminaison arrière (46).

9. Procédé pour faire fonctionner une automobile selon l'une quelconque des revendications 1 à 8,
**caractérisé en ce**
**que** l'ailette est ajustée, en particulier est déployée, sur la carrosserie (12) en tant qu'élément déflecteur (20) en fonction d'une situation de déplacement de l'automobile (10).
